# EUROPEAN PATENT APPLICATION

(11) **EP 4 722 085 A1**
(43) Date of publication of application: **08.04.2026**
(21) Application number: 24815066.6
(22) Date of filing: 26.04.2024
(51) Int. Cl.: B62D 25/20

(54) **UNDERSIDE COVER FASTENING STRUCTURE**

(30) Priority: 02.06.2023 JP 2023091407
(71) Applicant: Toyota Motor Kyushu, Inc., Miyawaka-shi, Fukuoka 823-0015 (JP)
(72) Inventor: KUROSE, Ryosei, Miyawaka-shi, Fukuoka 823-0015 (JP); MATSUMOTO, Kunihiro, Miyawaka-shi, Fukuoka 823-0015 (JP); ENOKIDA, Sho, Miyawaka-shi, Fukuoka 823-0015 (JP); MATSUMOTO, Takanori, Miyawaka-shi, Fukuoka 823-0015 (JP)
(74) Representative: Bandpay & Greuter
(86) International application number: PCT/JP2024/016437
(87) International publication number: WO 2024/247582

(57) **Abstract**

The present invention provides an undercover fixing structure capable of reducing vibration of an undercover during traveling by newly providing a fixing portion in a central section of the undercover, and further capable of preventing damage to parts around an assembly part to be fixed. This undercover fixing structure is the structure for fixing the undercover to the assembly part that covers a lower portion of a body of an automobile. The undercover fixing structure includes a fixing protruding portion that protrudes from one of the assembly part and the undercover and has a fixing face portion that is fixed to the other of the assembly part and the undercover at a tip end portion. The fixing protruding portion includes: a base portion that is fixed to one of the assembly part and the undercover; and a fragile portion that connects the base portion and the fixing face portion.

## Description

### [Technical Field]

The present invention relates to an undercover fixing structure mounted on a lower portion of a body of an automobile.

### [Background Art]

An undercover having an approximately flat shape is mounted on a lower portion of an automobile so as to cover the lower portion of the automobile. The undercover possesses an effect of reducing a resistance of air that flows below the body by covering the lower portion of the body thus enhancing an aerodynamic performance and quietness in the automobile.

Patent literature 1 discloses, as the configuration for mounting an undercover, a configuration where an undercover is fixed to a front bumper and a suspension frame that have high rigidity and ensure the stable fixing of the undercover.

### [Prior Art Literature]

### [Patent Literature]

[Patent literature 1] JP-2015-58779

### [Summary of Invention]

### [Technical Problem]

Air that a traveling vehicle receives from a front side is divided into, by a front bumper of the automobile, air that flows along an upper surface of the vehicle and air that flows below the vehicle. The air that is divided by the front bumper and flows below the vehicle forms a swirling air flow in a vertical direction in combination with a stress generated in the air at the time of separation. This swirling air flow, when passing below the body, intermittently and repeatedly collides with the undercover so as to push up the undercover upward.

Accordingly, the undercover vibrates due to air that flows below the automobile, the vibration is transmitted to the inside of the automobile, and an occupant perceives the vibration as noise.

Under such circumstances, to reduce the transmission of the vibration from the undercover, a countermeasure is considered where, in addition to a conventional fixing portion for the undercover, another fixing portion is provided to an assembly part of the automobile that is positioned above the undercover thus enhancing the rigidity of the undercover whereby vibration can be reduced.

To be more specific, a structure is considered where, as the assembly part of the automobile that fixes the undercover, for example, a leg portion (a structural body) is provided to a lower surface of a lower absorber that is positioned above the undercover, and the undercover is fixed to the leg portion.

However, in the structure where the undercover is fixed to the lower absorber, for example, in the case where a relatively large external force is applied to the undercover from below such as the case where the undercover collides with a ground, the lower absorber is pushed up together with the undercover by way of the fixing portion thus giving rise to a possibility that parts around the lower absorber are also damaged.

The present invention has been made in view of such circumstances, and it is an object of the present invention to provide an undercover fixing structure capable of reducing vibration of an undercover during traveling and, further, capable of preventing a damage to parts around an assembly part that constitutes an object to be fixed.

### [Solution to Problem]

An undercover fixing structure according to one aspect of the present invention is an undercover fixing structure for fixing an undercover that covers a lower portion of a body of an automobile to an assembly part that covers a lower portion of a body of an automobile. The undercover fixing structure includes a fixing protruding portion that protrudes from one of the assembly part and the undercover. The fixing protruding portion has a fixing face portion that is fixed to the other of the assembly part and the undercover at a tip end portion. The fixing protruding portion includes: a base portion that is fixed to one of the assembly part and the undercover; and a fragile portion that connects the base portion and the fixing face portion to each other.

An undercover fixing structure according to another aspect of the present invention is configured such that the fragile portion includes a plurality of plate-shaped portions each has one side connected to the base portion and the other side connected to the fixing face portion, and has a bent shape formed by bending a portion on a fixing face portion side with respect to a portion on a base portion side.

An undercover fixing structure according to still another aspect of the present invention is configured such that the fixing protruding portion is formed in an approximately tapered shape as a whole by setting one of the fixing face portion and the base portion smaller than the other of the fixing face portion and the base portion with respect to an exterior shape as viewed in a protruding direction of the fixing protruding portion.

### [Advantageous effects of invention]

According to the present invention, by increasing mounting rigidity of the undercover, vibration caused by air that flows below a vehicle can be reduced and hence, it is possible to enhance quietness in the automobile. It is also possible to minimize a damage to parts caused by an external force even when a relatively large external force is applied to the undercover from below.

### [Brief Description of Drawings]

Fig. 1(a) and Fig. 1(b) are explanatory views illustrating the flow of air separated by a front bumper of an automobile during traveling.
Fig. 2 is a schematic cross-sectional view illustrating an undercover fixing structure according to one embodiment of the present invention.
Fig. 3(a) and Fig. 3(b) are a front view and a perspective view illustrating a fixing protruding portion according to one embodiment of the present invention.
Fig. 4(a) and Fig. 4(b) are explanatory views illustrating the fixing protruding portion according to one embodiment of the present invention in a collapsed state caused by applying an external force to the fixing protruding portion.
Fig. 5 is an explanatory view illustrating positions at which the fixing protruding portion according to one embodiment of the present invention is disposed.
Fig. 6(a) and Fig. 6(b) are views illustrating another embodiment of the fixing protruding portion according to the present invention.

### [Description of Embodiments]

The present invention is characterized in that, in an undercover fixing structure that covers a lower portion of a body of an automobile, an undercover is fixed by a fixing protruding portion that protrudes from one of an assembly part and the undercover of the automobile to the other of the assembly part and the undercover. With such a configuration, the vibration of the undercover during traveling can be reduced and hence, it is possible to enhance quietness in the automobile. The embodiment of the present invention is described hereinafter.

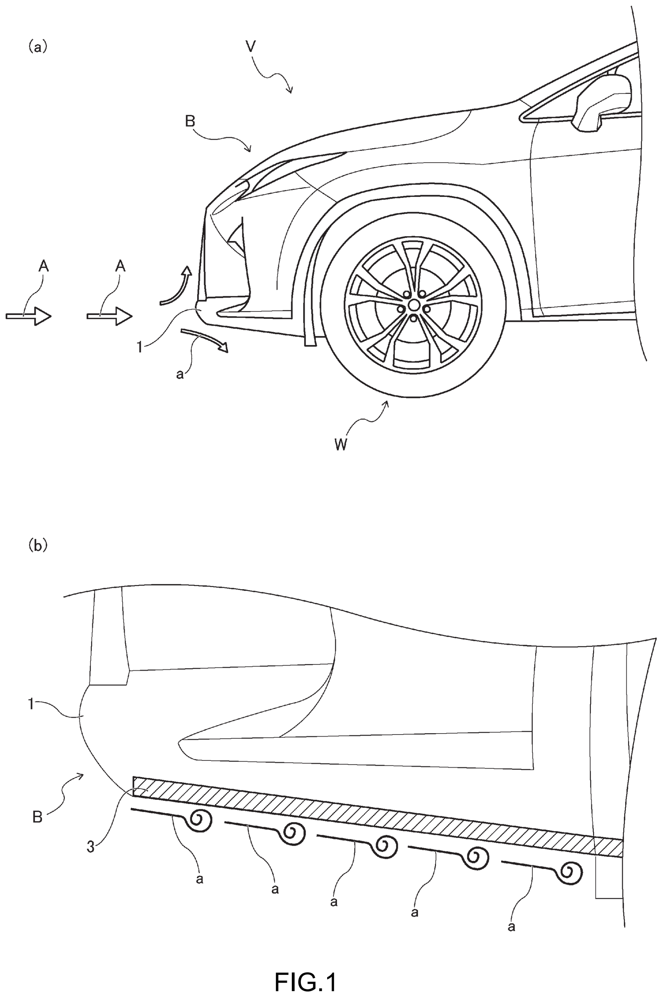

As illustrated in Fig. 1(a) and Fig. 1(b), in the automobile V, on a front end portion of a body B that is supported by four wheels W consisting of front wheels and rear wheels, an undercover 3 having an approximately flat shape is mounted so as to cover a lower portion of the body B. The undercover 3 is mounted on a lower side of an engine (not illustrated in the drawing) mounted on a front portion of the body B. Accordingly, the undercover 3 is also referred to as an engine undercover or the like, for example.

When the automobile V is traveling, as illustrated in Fig. 1(a), air A that collides with a front bumper 1 of the automobile V is separated in the upper and lower directions. Out of the separated airs A, air that flows in the lower direction flows below the undercover 3 rearward relative to the automobile V that is traveling. At this point of time, an air flow that flows below the undercover 3 (hereinafter referred to as "lower air flow a"), as illustrated in Fig. 1(b), is formed into a swirling air flow in the vertical direction in combination with a stress generated in the air flow at the time of separation, and air in the form of the swirling air flow repeatedly collides with the undercover 3 in such a manner that the air in the form of swirling air flow intermittently pushes the undercover 3 upward. The vibration is transmitted to the inside of the automobile and an occupant perceives the vibration as noise.

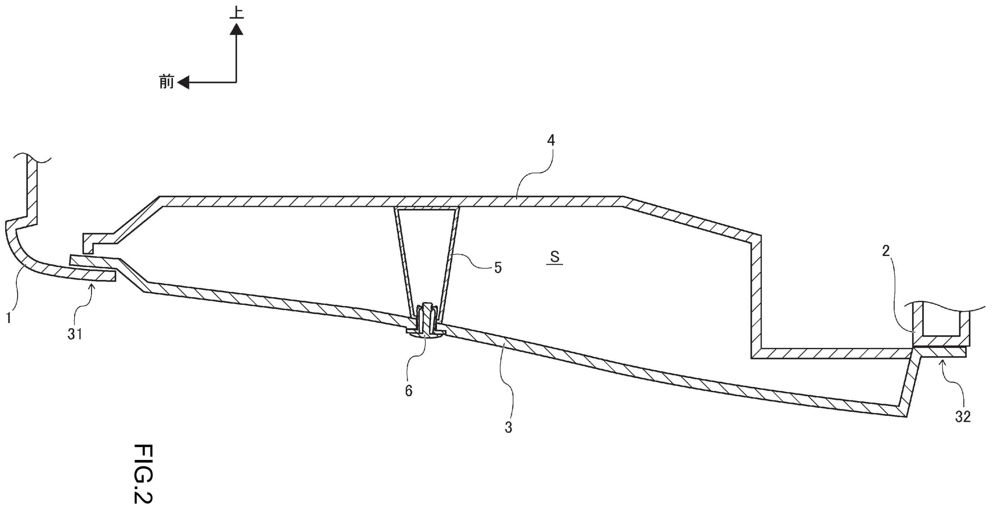

As illustrated in Fig. 2, the structure for fixing the undercover 3 (hereinafter referred to as "undercover fixing structure") is a component that fastens a lower absorber 4 that is an assembly part of the automobile V. The undercover fixing structure includes a fixing protruding portion 5 that protrudes from a lower absorber 4 side. The fixing protruding portion 5 is disposed on a lower side of the lower absorber 4, and protrudes downward. In place of mounting the fixing protruding portion 5 on the lower absorber 4, the fixing protruding portion 5 may be mounted on a flow straightening plate for supplying air to a radiator, a cross member or the like.

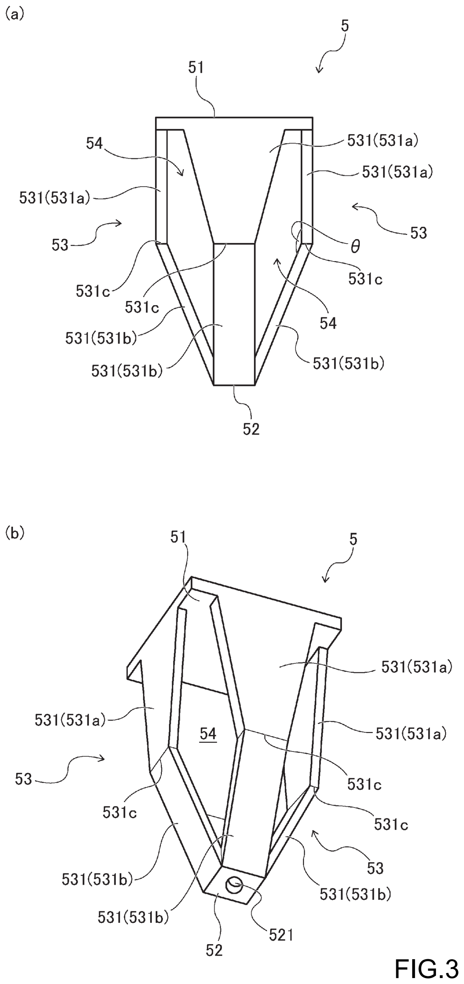

The whole fixing protruding portion 5 is formed using a synthetic resin. To describe the specific configuration of the fixing protruding portion 5, as illustrated in Fig. 3, the fixing protruding portion 5 is constituted of: a plate-shaped base portion 51; a plate-shaped fixing face portion 52 that is disposed in a spaced-apart manner from the base portion 51; and a fragile portion 53 that includes a plurality of bent plate portions that are bent-plate-shaped parts connecting the base portion 51 and the fixing face portion 52 to each other. As illustrated in Fig. 3(a), the fixing protruding portion 5 has a left-and-right symmetrical shape or an approximately left-and-right symmetrical shape as viewed in a side view. That is, as viewed in the protruding direction from the lower absorber 4 (as viewed toward the lower surface), the fixing protruding portion 5 has a symmetrical shape or an approximately symmetrical shape in respective directions consisting of a vertical direction that corresponds to a longitudinal direction of the body B and a lateral direction.

Further, with respect to the fixing protruding portion 5, an upper surface of the base portion 51, that is, a surface of the fixing protruding portion 5 on a side opposite to a fragile portion 53 side is fixed to the lower absorber 4 that is an assembly part of the automobile V and is a part positioned above the undercover 3.

Both the base portion 51 and the fixing face portion 52 are rectangular-plate-shaped portions. The fixing face portion 52 is positioned below the base portion 51, and is disposed parallel to the base portion 51. Further, an external size of a rectangular shape of the fixing face portion 52 is set smaller than an external size of the base portion 51.

In a central section of the fixing face portion 52, a mounting hole 521 is formed. A fixing jig 6 such as a clip is inserted into the mounting hole 521 for fixing the undercover 3. That is, the undercover 3 is fixed to the fixing protruding portion 5 by the fixing jig 6 in a state where the undercover 3 is brought into contact with a lower surface of the fixing face portion 52.

The fragile portion 53 is constituted of four connecting bodies 531 that are plate-shaped portions and correspond to respective side portions of the rectangular external shapes of the base portion 51 and the fixing face portion 52 both having a rectangular plate shape. The connecting body 531 is constituted of: a base-portion-side portion 531a that extends vertically from a peripheral edge portion of a lower surface of the base portion 51; and a fixing-face-side portion 531b having a rectangular shape that extends toward a lower end of the base-portion-side portion 531a such that the fixing-face-side portion 531b is inclined toward a side edge portion of the fixing face portion 52 that is smaller than the base portion 51. That is, a connecting portion between the-base-portion-side portion 531a and the fixing-face-side portion 531b constitutes a bent portion 531c having a bent shape.

The bent portion 531c is constituted of: the base-portion-side portion 531a that is vertically disposed; and the fixing-face-side portion 531b that is inclined toward the fixing face portion 52 that is smaller than the base portion 51 from the base-portion-side portion 531a and hence, an angle θ of the bent portion 531c surely becomes an obtuse angle. Nothing but example, the angle θ is approximately 160°.

Further, in this embodiment, the fixing-face-side portion 531b that forms the connecting body 531 is formed in a plate shape having substantially the same width as a lower-side edge portion of the fixing face portion 52. The base-side portion 531a that constitutes the connecting body 531 has a trapezoidal shape where a side of the connecting body 531 that forms a connecting portion with the fixing-face-side portion 531b has the same width as the fixing-face-side portion 531b, and a side of the connecting body 531 that forms a connecting portion with the base portion 51 is longer than a side that forms a connecting portion with the fixing-face-side portion 531b. That is, the base-portion-side portion 531a has a trapezoidal shape (frustoconical isosceles triangular shape) where a width is gradually narrowed from the base portion 51 side (an upper side) to the fixing face portion 52 side (lower side).

As described above, the fixing protruding portion 5 is configured such that the base portion 51 and the fixing face portion 52 that is smaller than the base portion 51 are connected to each other by the fragile portion 53 and hence, the fixing protruding portion 5 is formed in an approximately tapered shape where the size of the whole fixing protruding portion 5 is gradually made smaller downward. Further, the fixing protruding portion 5 is constituted of: the base portion 51 having a plate shape; the fixing face portion 52 having a plate shape; and the fragile portion 53 and hence, a space 54 is formed in the fixing protruding portion 5. The space formed in the fixing protruding portion 5 communicates with the outside through gaps formed between the connecting bodies 531 disposed adjacently to each other and the mounting hole 521 formed in the fixing face portion 52.

The fixing protruding portion 5 is provided by mounting a member for forming a protruding portion (hereinafter referred to as "protruding portion forming body") that is a body separate from the lower absorber 4. The protruding portion forming body is an integral part constituted of: the base portion 51; the fixing face portion 52; and the fragile portion 53. In the protruding portion forming body, an upper surface of the base portion 51 (the surface of the base portion 51 on a side opposite to the fixing face portion 52 side assumes a fixing surface to be fixed to the lower absorber 4. As a method of fixing the protruding portion forming body to the lower absorber 4, the protruding portion forming body may be fixed to the lower absorber 4 by applying a double-sided tape, an adhesive, thermal welding or the like to a surface of the base portion 51 of the protruding portion forming body that is in contact with the lower absorber 4. However, it is not always necessary to form the fixing protruding portion 5 as a body separate from the lower absorber 4, and the fixing protruding portion 5 may be formed as an integral part of the lower absorber 4 at the time of molding the resin-made lower absorber 4.

As the method of fixing the undercover 3 and the fixing protruding portion 5 to each other, as illustrated in Fig. 2, the fixing is performed by the fixing jig 6 inserted into the mounting hole 521 formed in the fixing face portion 5 protruding from a lower portion of the lower absorber 4. The fixing jig 6 passes through a fixing hole portion formed in the undercover 3, passes through the mounting hole 521, and fixes the fixing face portion 52 to the undercover 3 by engagement. As the fixing jig 6, for example, a rivet-shaped clip, a bolt or the like that is used in assembling a vehicle part is used.

However, with respect to the method of fixing the undercover 3 and the fixing protruding portion 5 to each other, it is not always necessary to perform the fixing using the fixing jig 6, and the fixing may be performed using an adhesive, a double-sided tape, thermal welding or the like. Further, it is needless to say that the formation of the mounting hole 521 in the fixing face portion 52 is unnecessary.

Further, with respect to the basic mounting of the undercover 3 to the body B, besides the fixing protruding portion 5, in the advancing direction of the automobile V, a front fastening portion 31 is provided in front of the fixing protruding portion 5, and a rear fastening portion 32 is provided behind the fixing protruding portion 5.

In this embodiment, the front fastening portion 31 is disposed in the vicinity of a rear end portion of the front bumper 1, and the rear fastening portion 32 is disposed on a lower surface of a radiator support 2 of the automobile V. That is, the undercover 3 is fastened to the front bumper 1 and the radiator support 2 both having relatively high weight and high rigidity and hence, the undercover 3 is securely fixed to a lower portion of the body B.

According to the fixing protruding portion 5, the undercover 3 can be securely fixed to a lower portion of the body B of the automobile V. Further, by forming a certain hollow portion S between the lower absorber 4 and the undercover 3 and by fixing the undercover 3 to the fixing protruding portion 5, it is possible to enhance rigidity of the undercover 3 in a vertical direction in a state where the undercover 3 is mounted on a lower portion of the body B.

It is sufficient that the front fastening portion 31 is positioned in front of the fixing protruding portion 5 in an advancing direction of the automobile V, and can securely fasten the undercover 3 to the automobile V. Accordingly, the member to which the front fastening portion 31 is provided is not limited to the front bumper 1, and the front fastening portion 31 may be provided to a flow straightening portion for supplying air to the radiator or the cross member.

Further, it is sufficient that the rear fastening portion 32 is positioned behind the fixing protruding portion 5 in the advancing direction of the automobile V, and can securely fix the undercover 3 to the automobile V in the same manner as the front fastening portion 31. Accordingly, the rear fastening portion 32 may be provided to a front suspension member or may be provided to a floor behind the front suspension member.

According to the undercover fixing structure according to the embodiment, as illustrated in Fig. 1, even when a downward air flow a that is generated when the automobile V is traveling repeatedly collides with the undercover 3 so as to push the undercover 3, it is possible to prevent the undercover 3 from vibrating vertically as effectively as possible. According to the undercover fixing structure of the present embodiment, the vibration of the undercover 3 can be reduced and hence, the quietness in the automobile during traveling can be enhanced.

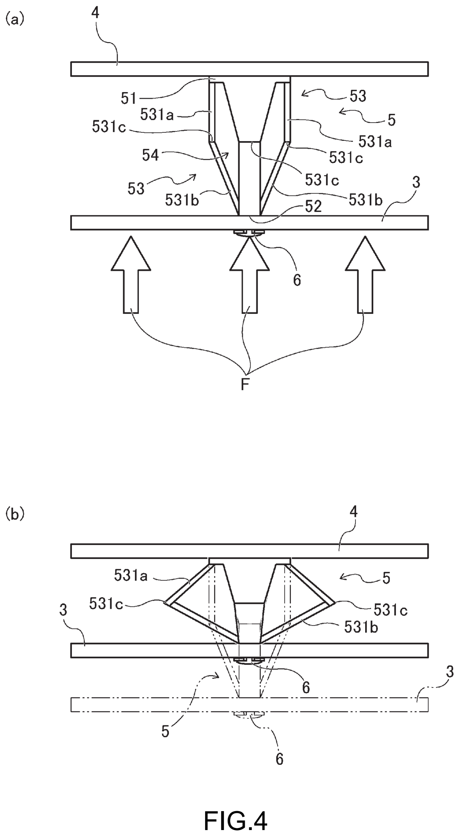

As illustrated in Fig. 4(a) and Fig. 4(b), the fixing protruding portion 5 is configured such that the space 54 is formed in the fixing protruding portion 5. With such a configuration, compared with the configuration where a solid portion exists between the base portion 51 and the fixing face portion 52, the fixing protruding portion 5 becomes a fragile portion. That is, when a relatively large external force F is applied to the undercover 3 from below such as the case where the undercover 3 collides with a ground, the fixing protruding portion 5 becomes a portion that is likely to be easily collapsed in a vertical direction by an external force F. Accordingly, it is possible to prevent the lower absorber 4 from being pushed up by the undercover 3 by way of the fixing protruding portion 5. Accordingly, it is possible to reduce the occurrence of damaged portions when a lower portion of the body B of the automobile V collides with a road surface or an obstacle.

Further, the fixing protruding portion 5 adopts the structure where the bent portion 531c is formed at each connecting portion 531 so that the fixing protruding portion 5 is more liable to be easily collapsed by the external force applied from below. To be more specific, as illustrated in Fig.4(a), when an external force F pushes up the undercover 3 from below, as illustrated in Fig. 4(b), the connecting portions 531 are bent toward the outside using the bent portions 531c as initiation points and hence, the whole fixing protruding portion 5 can be collapsed in the vertical direction.

Further, the fixing-face-side portions 531b of the connecting portions 531 that extend from the fixing face portion 52 are formed in an inclined shape. That is, the fixing protruding portion 5 is formed in a shape that prevents an external force from below from being transmitted straightly upward. Accordingly, it is possible to reduce a force that acts on the base portion 51 fixed to the lower absorber 4 and the base-portion-side portions 531a of the connecting body 531 extending from the base portion 51.

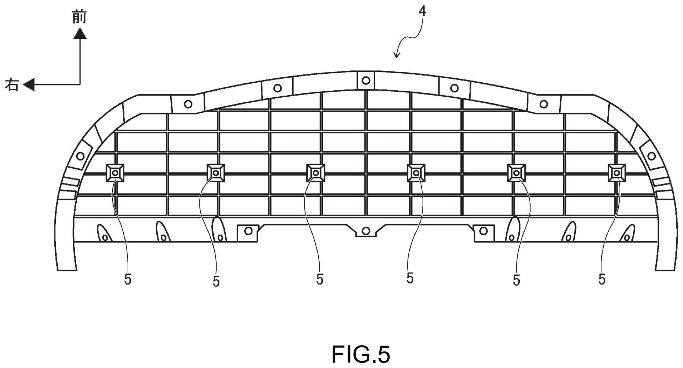

As an example of the arrangement of fixing portions each formed of the fixing protruding portion 5, as illustrated in Fig. 2 and Fig. 5, the fixing protruding portions 5 are provided at an approximately central section of the lower absorber 4 in the advancing direction of the automobile V (in Fig. 5, an upper side in the drawing being illustrated as an advancing direction side (front side) of the automobile V). Six fixing protruding portions 5 are disposed in the vehicle width direction of the lower absorber 4.

By arranging the fixing portions constituted of the fixing protruding portions 5 at an approximately central section of the lower absorber 4 in the advancing direction of the automobile V, as illustrated in Fig. 2, when a front portion of the undercover 3 is fixed to the front bumper 1 and a rear portion of the undercover 3 is fixed to the radiator support 2, it is possible to increase the rigidity of a longitudinal central section of the undercover 3 that has the relatively low rigidity.

In this embodiment, six fixing protruding portions 5 in total are disposed at a fixed interval in the vehicle width direction of the lower absorber 4. However, it is not always necessary to provide six fixing protruding portions 5, and the desired number of the fixing protruding portions 5 may be selected in conformity with a vehicle width of the automobile V that uses the undercover fixing structure of the present invention.

Further, the interval between the plurality of fixing protruding portions 5 is not particularly limited, and the interval is also not limited to a predetermined interval. It is preferable to provide the fixing protruding portions 5 at portions where the rigidity of the undercover 3 is weak. For example, it is considered that the fixing protruding portions 5 are disposed at an interval that is approximately 1/3 of a size of the undercover 3 in the vehicle width direction.

Further, in this embodiment, the fixing protruding portions 5 are arranged in a row in the vehicle width direction of the lower absorber 4. However, the arrangement of the fixing protruding portions 5 is not limited to such a case, and the fixing protruding portions 5 may be arranged in a staggered manner in the longitudinal direction, or may be arranged at random. Also in these cases, the fixing protruding portions 5 may be arranged at suitable positions by taking into account the shape of the lower portion of the body B of the automobile V that uses the fixing structure of the undercover according to the present invention.

However, with respect to the positions, the number and the respective intervals of the fixing protruding portions 5, the most preferable values change depending on a type of each automobile V. Accordingly, it is preferable to set these values such that the entire rigidity of the undercover 3 becomes uniform by using a simulation software, for example.

In this embodiment, each fixing protruding portion 5 is described such that, the base portion 51 is fixed in advance to the lower absorber 4, that is, the assembly part, and the undercover 3 is mounted on the fixing face portion 52 that constitutes the other end portion. However, the fixing protruding portion 5 is not limited to such a configuration. That is, the fixing protruding portion 5 may be configured such that, opposite to the above-mentioned configuration, the base portion 51 is fixed to the undercover 3 in advance, and the fixing face portion 52 that constitutes the other end portion is mounted on the lower absorber 4. That is, the fixing protruding portion 5 may be a part that protrudes upward from the undercover 3 side and has the fixing face portion 52 that is fixed to the lower absorber 4 at a tip end portion.

Further, the fragile portion 53 of the fixing protruding portion 5 according to the embodiment is constituted of four connecting bodies 531. However, the number of the connecting bodies 531 that constitute the fragile portion 53 is not limited. It is sufficient for the fixing protruding portion 5 to have rigidity to an extent that the vertical vibration of the automobile V caused by a downward air flow a during traveling can be reduced. It is sufficient that the fixing protruding portion 5 includes at least one connecting body 531 that connects the base portion 51 and the fixing face portion 52.

Further, the fixing protruding portion 5 according to the embodiment has an approximately tapered shape when viewed as a whole. The connecting body 531 is divided into the base-portion-side portion 531a and the fixing-face-side portion 531b, and the bent portion 531c having a bent shape is provided to the connecting portion between the base-portion-side portion 531a and the fixing-face-side portion 531b. However, it is not always necessary that the fixing protruding portion 5 has such a configuration, and it is sufficient for the fixing protruding portion 5 to include the fragile portions 53 that collapse when an external force is applied to the fragile portion 53.

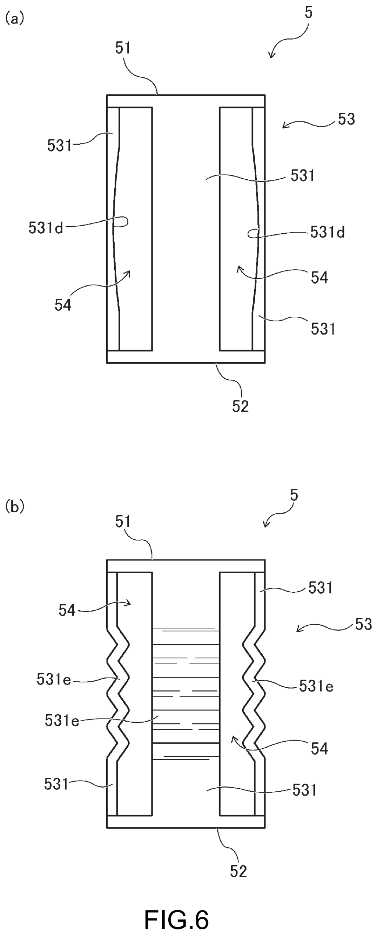

Accordingly, as another mode of the fixing protruding portion 5, the fixing protruding portion 5 may adopt the configuration illustrated in Fig. 6 where a portion that constitutes the base portion 51 and a portion that constitutes the fixing face portion 52 have substantially the same external sizes, the fixing protruding portion 5 has substantially a cubic shape as a whole, and the fragile portions 53 are each formed of the connecting body 531 that connects the base portion 51 and the fixing face portion 52 vertically.

In this case, to provide fragileness by which the connecting body 531 collapses when an external force of a predetermined value or more is applied to the connecting body 531, the connecting body 531 may have the structure that has a thin wall portion 531d formed by decreasing a thickness of a portion of each connecting body 531(illustrated in Fig. 6(a)). Alternatively, each connecting body 531 may have the bellows structure that has a plurality of collapse initiation portions 531e having an L-shaped cross section that become initiation points of collapsing at a portion of or the whole connecting body 531 (illustrated in Fig. 6(b)).

The description of the above-mentioned embodiment exemplifies one example of the present invention, and the present invention is not limited by the above-mentioned embodiment. Accordingly, it is needless to say that, also with respect to embodiments other than the above-mentioned embodiment, so long as these embodiments do not depart from the technical concept of the present invention, various modifications are conceivable depending on designs or the like. Further, the above-mentioned advantageous effects merely enumerate preferred advantageous acquired by the present invention, and the advantageous effects acquired by the present invention are not limited to the advantageous effects described in the embodiment.

### [List of signs]

V: automobile
B: body
W: wheel
A: air
a: downward air flow
S: hollow portion
F: external force
1: front bumper
2: radiator support
3: undercover
31: front fastening portion
32: rear fastening portion
4: lower absorber
5: fixing protruding portion
51: base portion
52: fixing face portion
521: mounting hole
53: fragile portion
531: connecting body
531a: base-portion-side portion
531b: fixing-face-side portion
531c: bent portion
531d: thin wall portion
531e: collapse initiation portion
54: space
6: fixing jig

## Claims

1. An undercover fixing structure for fixing an undercover to an assembly part that covers a lower portion of a body of an automobile, the undercover fixing structure comprising a fixing protruding portion that protrudes from one of the assembly part and the undercover, the fixing protruding portion having a fixing face portion that is fixed to the other of the assembly part and the undercover at a tip end portion, wherein
the fixing protruding portion includes:
a base portion that is fixed to one of the assembly part and the undercover; and
a fragile portion that connects the base portion and the fixing face portion to each other.

2. The undercover fixing structure according to claim 1, wherein the fragile portion includes a plurality of plate-shaped portions each has one side connected to the base portion and the other side connected to the fixing face portion, and has a bent shape formed by bending a portion on a fixing face portion side with respect to a portion on a base portion side.

3. The undercover fixing structure according to claim 2, wherein the fixing protruding portion is configured such that one of a fixing face portion and the base portion is set smaller than the other of the fixing face portion and the base portion in an external shape as viewed in a protruding direction of the fixing protruding portion thus being formed in an approximately tapered shape as a whole.
